**Europäisches Patentamt**

**European Patent Office**

**Office européen des brevets**

(19)

(11) Veröffentlichungsnummer: **0 170 870**
**B1**

(12) # EUROPÄISCHE PATENTSCHRIFT

(45) Veröffentlichungstag der Patentschrift:
**05.10.88**

(21) Anmeldenummer: **85108095.2**

(22) Anmeldetag: **29.06.85**

(51) Int. Cl.⁴: **B 29 C 69/00**, B 29 C 37/00,
B 60 J 1/00, B 60 R 13/06,
E 06 B 3/62 // B29K21:00

(54) **Verfahren zum Herstellen von Dichtungsprofilleisten.**

(30) Priorität: **25.07.84 DE 3427346**

(43) Veröffentlichungstag der Anmeldung:
**12.02.86 Patentblatt 86/7**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**AT - B - 316 112**
**DE - A - 3 039 335**
**DE - A - 3 224 906**
**DE - A - 3 300 862**
**US - A - 2 853 748**
**US - A - 3 455 080**

(73) Patentinhaber: **Continental Aktiengesellschaft,
Königsworther Platz 1, D-3000 Hannover 1 (DE)**

(72) Erfinder: **Bernitz, Bernhard, Ing., Langenforther
Strasse 60, D-3000 Hannover 51 (DE)**
Erfinder: **Lenger, Theodor, Dipl.-Ing., im Kleinen Felde 1,
D-3017 Pattensen (DE)**

## Beschreibung

Die Erfindung bezieht sich auf Verfahren zum Herstellen von Dichtungsprofilleisten aus Gummi oder gummiähnlichem Kunststoff durch Strangpressen, wobei die Dichtungsprofilleisten einen im Querschnitt U-förmigen Klemmteil mit an der Innenseite der beiden Schenkel des Klemmteils in gegenständiger Anordnung angeformten, unter einem Winkel nach innen geneigten Klemmlippen aufweisen, sowie auf nach solchen Verfahren hergestellte Profilleisten. Ein derartiges Verfahren sowie eine Profilleiste mit den Merkmalen des Oberbegriffs des Anspruchs 4 gehören zum Stand der Technik.

Profilleisten dieser Art, wie sie beispielsweise zum Abdichten der Fenster, Türen und Kofferraumdeckel in Kraftfahrzeugen, aber auch zum dichten Verschliessen von Wandöffnungen, Lukendeckeln u. dgl. in Gebäuden in weitem Umfange Verwendung finden, müssen ihre Dichtfunktion über lange Zeiträume unter wechselnden Bedingungen ohne spürbares Nachlassen erfüllen. Häufig tritt dazu noch die Notwendigkeit eines gegen ständige dynamische Beanspruchungen festen Klemmsitzes auf den Rahmenteilen der Randkonstruktion mit einem bei ungehinderter leichter Montage doch definierten konstanten Abziehwiderstand. Die zum Teil einander widersprechenden Forderungen führten zu den allgemein gebräuchlichen Profilgestaltungen mit abgerundeten federnden Dichtlippen und schräg in das Innere des freien U-Querschnittes in gegenständiger Anordnung hineinragenden Klemmlippen. Höheren Ansprüchen sowohl an die Dichtwirkung als auch an den festen Klemmsitz konnte dann nur noch mit besonderen und aufwendigen Massnahmen nach bekannten Vorschlägen wie beispielsweise Herstellen der Lippen aus einer vom Leistenkörper abweichenden Gummi- oder Kunststoffmischung anderer Härteeinstellung oder mit anderen Festigkeits- oder Elastizitätseigenschaften, Verwenden zusätzlicher Haft- oder Dichtungsmittel, Einbetten spezieller Armierungseinlagen u.a.m. genügt werden.

Die bisherigen Verfahren zur Herstellung derartiger Dichtungsprofilleisten waren sowohl bezüglich des Verfahrensablaufs als auch im Hinblick auf die zur Realisierung verbesserter Produkteigenschaften benötigten Einrichtungen sehr aufwendig. Trotzdem entsprachen die bekannten Profilleisten in ihrem Klemmteil häufig nicht den bezüglich Dicht- und Klemmwirkung an sie gestellten Forderungen.

Es stellte sich daher die Aufgabe, ein vereinfachtes, den Fertigungsaufwand senkendes Verfahren zur Herstellung von klemmbaren Dichtungsprofilleisten aufzuzeigen und ausserdem die Dicht- und Klemmwirkung im Klemmteil solcher Profilleisten zu verbessern.

Zur Lösung der die Profilleisten-Herstellung betreffenden Aufgabe wird gemäss der vorliegenden Erfindung ein Verfahren der eingangs geschilderten Art vorgeschlagen, bei dem im Unterschied zum Bekannten die sich jeweils gegenüberstehenden Klemmlippen zusammenhängend als gewinkelte Wandung stranggepresst und nachfolgend durch in Strangpressrichtung geführte mechanische Trennschnitte zu ihrem einbaufertigen U-Querschnitt geöffnet werden. Die Trennschnitte können dabei entweder unmittelbar nach dem Austreten der Profilleisten aus der Strangpresse im noch vorwiegend plastischen Zustand oder aber stattdessen auch mit zeitlichem Abstand davon im bereits vernetzten, vorwiegend elastischen Zustand des elastomeren Werkstoffes geführt werden.

Die Erfindung ermöglicht trotz geringfügig erhöhten maschinentechnischen Aufwandes insgesamt eine Reduzierung der Fertigungskosten und führt in überraschend einfacher Weise zu Profilleisten, deren an der Scheibe oder/und dem Rahmen unmittelbar anliegende dichtende bzw. klemmende Querschnittsteile mechanisch geschnittene Längskanten mit verbesserter Dicht- und Klemmwirkung aufweisen, womit der diesbezügliche Teil der oben genannten Aufgabenstellung gelöst wird. Im Vergleich zu den üblichen abgerundeten Lippenformen sind geschnittene Kanten hinsichtlich ihrer Dicht- und Klemmwirkung aber stets überlegen, wie die Erfahrung beispielsweise mit im Maschinenbau verwendeten bestimmten Dichtringen schon gezeigt hat, die zwar als Präzisions-Formartikel hergestellt, nachträglich aber noch eigens mechanisch bearbeitet werden. Die Erfindung vermeidet umständliche Bearbeitungsgänge und schafft mit einem Schneidvorgang eine im Endeffekt neuartig gestaltete Profilleiste mit beträchtlich erhöhter Gebrauchstüchtigkeit. Die Trennschnitte werden vorzugsweise spanlos geführt. Es liegt aber im Rahmen der Erfindung, mit der Wahl begrenzter Profilausschnitte, der Schnittformen und schon der Schnittwinkel auf den jeweiligen Anwendungsfall abgestimmte vorteilhafte Ausgestaltungen vorzunehmen.

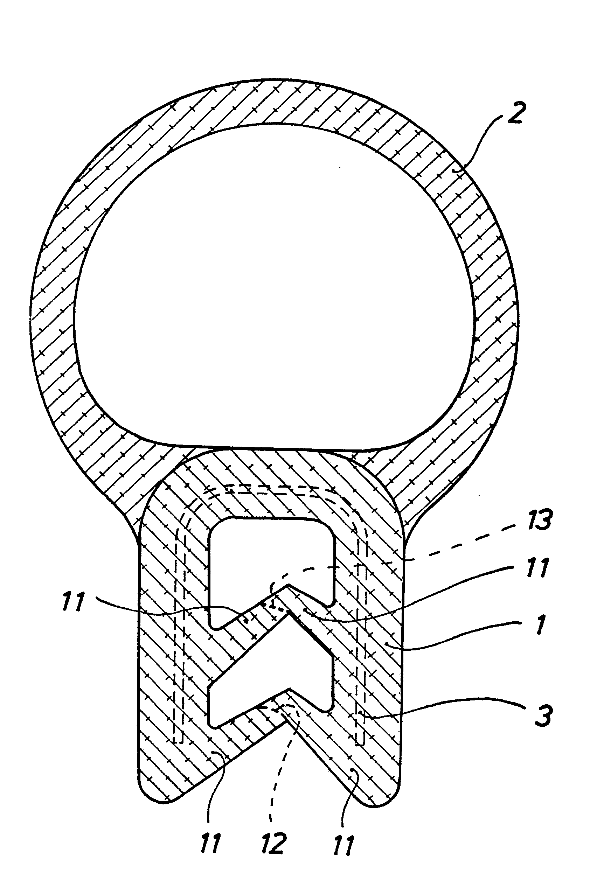

Die Erfindung ist anhand der schematischen Darstellung eines Ausführungsbeispiels in der Zeichnung verdeutlicht. Die einzige Figur der Zeichnung zeigt einen Querschnitt durch eine Kraftfahrzeug-Steckprofilleiste.

Die zweigeteilt aus einem Klemmteil 1 und einem Dichtungsteil 2 zusammengesetzte gezeichnete Profilleiste ist beispielsweise zum Aufstecken auf die Kofferraumumrandung eines Kraftfahrzeuges und zum Abdichten gegen den Kofferraumdeckel vorgesehen. Ihren spezifischen Funktionen entsprechend sind die beiden Leistenteile 1 und 2 auch aus verschiedenen elastomeren Stoffen aufgebaut, nämlich der Klemmteil 1 aus einer massiven synthetischen Kautschukmischung höherer Härte mit einer in diesem Falle vorgesehenen durchlaufenden biegsamen metallischen Verstärkungseinlage 3, der in haftender Bindung damit zusammenhängende schlauchförmige Dichtungsteil 2 dagegen aus einem vergleichsweise weichen Moosgummi.

Der Klemmteil 1 hat im wesentlichen die Querschnittsform eines offenen U mit an der Innenseite der beiden Schenkel in gegenständiger Anordnung angeformten, unter einem Schrägwinkel nach innen geneigten Klemmlippen 11. Erfindungsgemäss sind jeweils die einander gegenüberstehenden Klemmlippen paarweise zusammenhängend als einheitliche gewinkelte Wandung durchlaufend hergestellt, so dass der Klemmteil in dem gezeichneten Herstellungszustand im Augenblick des Austretens aus dem Mundstück der nichtgezeichneten Strangpresse etwa einen Doppelkammerschlauch darstellt. Erst in einem nachfolgenden Schneidvorgang wird das U-Profil durch Trennschnitte gemäss den gestrichelt angedeuteten Schnittkanten 12, 13 geöffnet, um den gebrauchsfertigen Einbauzustand der Profilleiste herzustellen. Die Trennschnitte können je nach Bedarf geradlinig – Schnittkante (13) – unter zweckentsprechend gewählten Winkeln oder auch unter bestimmten Radien gekrümmt – Schnittkante (12) – ausgeführt sein.

Die Erfindung ist an keine bestimmte Querschnittsform gebunden, sondern sie lässt sich mit Vorteil auf beliebige andere Abdicht- und Klemmleisten anwenden.

## Patentansprüche

1. Verfahren zum Herstellen von Dichtungsprofilleisten aus Gummi oder gummiähnlichem Kunststoff durch Strangpressen, wobei die Dichtungsprofilleisten einen im Querschnitt U-förmigen Klemmteil mit an der Innenseite der beiden Schenkel des Klemmteils in gegenständiger Anordnung angeformten, unter einem Winkel nach innen geneigten Klemmlippen aufweisen, dadurch gekennzeichnet, dass die sich jeweils gegenüberstehenden Klemmlippen zusammenhängend als gewinkelte Wandung stranggepresst und nachfolgend durch in Strangpressrichtung geführte mechanische Trennschnitte zu ihrem einbaufertigen U-Querschnitt geöffnet werden.

2. Verfahren nach Anspruch 1, dadurch gekennzeichnet, dass die Trennschnitte im noch vorwiegend plastischen Zustand der stranggepressten Profilleisten geführt werden.

3. Verfahren nach Anspruch 1, dadurch gekennzeichnet, dass die Trennschnitte im bereits vernetzten, vorwiegend elastischen Zustand des elastomeren Werkstoffes der Profilleisten geführt werden.

4. Nach dem Verfahren gemäss einem der Ansprüche 1 bis 3 hergestellte Dichtungsprofilleiste aus Gummi oder gummiähnlichem Kunststoff, zum Einfassen von Glasscheiben oder Türplatten in Wandöffnungen oder Fensterrahmen, die einen im Querschnitt U-förmigen Klemmteil (1) mit an der Innenseite der beiden Schenkel des Klemmteils in gegenständiger Anordnung angeformten, unter einem Winkel nach innen geneigten Klemmlippen (11) aufweist, dadurch gekennzeichnet, dass die an der Scheibe bzw. Platte oder dem Rahmen unmittel zur Anlage kommenden Dichtkanten der Klemmlippen (11) als durch mechanische, die beiden jeweils einander gegenüberliegenden Klemmlippen (11) voneinander trennende Schnitte erzeugte Schnittkanten (12, 13) ausgebildet sind.

5. Profilleiste nach Anspruch 4, dadurch gekennzeichnet, dass die Schnittkanten (13) scharfkantig auslaufend mit geradlinig-ebener Schnittfläche ausgebildet sind.

6. Profilleiste nach Anspruch 4, dadurch gekennzeichnet, dass die Schnittkanten (12) scharfkantig auslaufend mit gekrümmter Schnittfläche ausgebildet sind.

## Revendications

1. Procédé pour la production par extrusion de profilés d'étanchéité en caoutchouc ou matière plastique caoutchouteuse, comprenant une partie de serrage à section en U avec des lèvres de serrage moulées en regard sur la face intérieure des deux branches de la partie de serrage et inclinées vers l'intérieur, ledit procédé étant caractérisé en ce que les lèvres de serrage en regard sont extrudées sous forme d'une paroi continue anguleuse, puis ouvertes par des coupes mécaniques suivant le sens d'extrusion pour présenter leur section U prête à l'emploi.

2. Procédé selon revendication 1, caractérisé en ce que les coupes sont faites dans l'état encore essentiellement plastique des profilés extrudés.

3. Procédé selon revendication 1, caractérisé en ce que les coupes sont faites dans l'état déjà réticulé et essentiellement élastique du matériau élastomère des profilés.

4. Profilé d'étanchéité en caoutchouc ou matière plastique caoutchouteuse, produit par le procédé selon une quelconque des revendications 1 à 3 pour la fixation de vitres ou de panneaux de porte dans des baies murales ou des châssis de fenêtre, et présentant une partie de serrage (1) à section en U avec des lèvres de serrage (11) moulées en regard sur la face intérieure des deux branches de la partie de serrage et inclinées vers l'intérieur, ledit profilés étant caractérisé en ce que les bords d'étanchéité des lèvres de serrage (11) s'appliquant directement sur la vitre, le panneau ou le châssis sont formés par des bords de coupe (12, 13) mécaniques, qui séparent les deux lèvres de serrage (11) en regard.

5. Profilé selon revendication 4, caractérisé en ce que les bords de coupe (13) sont réalisés avec une arête vive et une face de coupe plane et rectiligne.

6. Profilé selon revendication 3, caractérisé en ce que les bords de coupe (12) sont réalisés avec une arête vive et une face de coupe courbe.

## Claims

1. Method of producing profiled sealing strips formed from rubber or rubber-like plastics material by extrusion, the profiled sealing strips having a clamping portion with a U-shaped cross-section and with clamping lips which are moulded to fit on the inner surface of the two arms of the clamping portion in alignment and are inwardly inclined at an angle, characterised in that each respective pair of clamping lips disposed opposite to each other is continuously extruded as an angled wall, and subsequently the clamping lips are opened by mechanical separating dies, which are guided in the direction of extrusion, to form their U-shaped cross-section ready to be fitted into position.

2. Method according to claim 1, characterised in that the separating dies are conducted when the extruded profiles strips are still predominantly in their plastic state.

3. Method according to claim 1, characterised in that the separating dies are conducted when the elastomeric material of the profiled strips is in its already cross-linked, predominantly elastic state.

4. Profiled sealing strip, formed from rubber or rubber-like plastics material and produced by the method according to one of claims 1 to 3 for edging panes of glass or door panels in wall openings or window frames, which strip has a clamping portion (1) with a U-shaped cross-section and with clamping lips (11) which are moulded to fit on the inner surface of the two arms of the clamping portion in alignment therewith and are inwardly inclined at an angle, characterised in that the sealing edges of the clamping lips (11), which abut directly against the pane, panel or frame, are in the form of cut edges (12, 13) which are produced by mechanical dies which separate each respective pair of clamping lips (11), disposed opposite to each other, from each other.

5. Profiled strip according to claim 4, characterised in that the cut edges (13) are sharp-edged so as to end with a rectilinearly-flat cut surface.

6. Profiled strip according to claim 4, characterised in that the cut edges (12) are bevelled so as to end with a curved cut surface.